## Europäisches Patentamt

## European Patent Office

## Office européen des brevets

(11) Publication number: **0 125 674**
**B1**

(12) # EUROPEAN PATENT SPECIFICATION

(45) Date of publication of the patent specification:
**05.11.86**

(51) Int. Cl.⁴: **G 03 B 27/58**

(21) Application number: **84105420.8**

(22) Date of filing: **12.05.84**

(54) Film cassette.

(30) Priority: **16.05.83 US 494978**

(43) Date of publication of application:
**21.11.84 Bulletin 84/47**

(45) Publication of the grant of the patent:
**05.11.86 Bulletin 86/45**

(84) Designated Contracting States:
**DE GB**

(56) References cited:
**US-A-1 479 960**
**US-A-1 832 277**
**US-A-2 472 582**
**US-A-3 266 689**
**US-A-4 034 929**
**US-A-4 261 465**

(73) Proprietor: **E.I. DU PONT DE NEMOURS AND COMPANY, 1007 Market Street, Wilmington Delaware 19898 (US)**

(72) Inventor: **Mikulin, Joseph Frank, 10 Derby Lane, North Brunswick New Jersey 08902 (US)**

(74) Representative: **Werner, Hans- Karsten, Dr., Deichmannhaus am Hauptbahnhof, D-5000 Köln 1 (DE)**

EP 0 125 674 B1

## Description

This invention relates to a cassette adapted to receive any one of a predetermined number of standard sized rolls of light sensitive material, such as phototypesetting film.

Phototypesetting film is that light sensitive film product that is utilized in the phototypesetting industry. Phototypesetting film is available in a number of predetermined standard width roll sizes. As typical examples, phototypesetting film is available in four-inch wide, six-inch wide and eight-inch wide roll sizes.

Phototypesetting film is manufactured by coating a substrate with a light sensitive emulsion, slicing the product so produced into predetermined width sizes, and wrapping a predetermined length of the film product in a roll configuration onto a tubular core.

Once the film product has been wrapped on the core, an operator inserts a film end support into each opposed end of the core. Each film end support is an octagonal member with cylindrical stubs sized to loosely fit into the ends of the core and permit the core to rotate as film is unwound. The operator inserts the assembled roll and associated end supports into a cassette. Thereafter, the cassette is closed to provide a light-tight sealed enclosure for the film roll. Typically, glue, staples or other fasteners are used to close the cassette.

These above-described manufacturing steps occur in dark room conditions in order to prevent premature exposure of the phototypesetting film. However, operating in dark room conditions makes the assembly isertion and closure steps more difficult. Accordingly, it is also believed to be advantageous to provide a cassette structure which facilitates the insertion of finished rolls of phototypesetting film with minimal labor. It is also believed to be advantageous to provide a cassette that has a cover which may be easily manipulated in a dark room environment so as to form the necessary light tight seal by snappingly engaging the cover to the cassette thereby obviating the need for glue, staples or other fasteners. It is believed to be of still further advantage to provide a cassette structure that is easy to mass produce at low unit cost.

The present invention relates to a cassette for a roll of light sensitive material such as phototypesetting film. The cassette comprises an open box-like receptacle provided with a bottom, upstanding front and rear walls, and a pair of upstanding end walls. A guide groove extends along the top edge of each of the end walls. The cassette further comprises a cover having a planar base and a downturned rear flange. The cover includes two opposed downturned end flanges, each of which carries a track that is sized for slidable engagement with a corresponding one of the guide grooves provided in the end walls. The cover further includes engagement means cooperable with the rear wall for snappingly engaging the cover thereto. That is, as the cover is advanced along the guide grooves, the engagement means on the cover cooperates with the rear wall so that continued closing motion of the cover permits it to be received in snapping engagement with the rear wall.

The interior of the receptacle is provided with an array of channels which are arranged to operate with themselves and/or one of the end walls the cassette to define a cassette able to receive any one of a predetermined number of standard sized rolls of a light sensitive material.

The invention may be more fully understood from the following detailed description thereof taken in connection with the accompanying drawings which form a part of this application and in which:

Figure 1 is a front elevational view of a cassette in accordance with the present invention with portions thereof broken away to expose the interior of the cassette and a roll of light sensitive material end support received therein;

Figure 2 is a top view of a cassette shown in Figure 1 with the cover almost entirely removed and with two end supports received therein; and

Figure 3 is a section view taken along section lines 3-3 in Figure 1; and

Figures 4 through 6 are enlarged section views of a portion of the cassette illustrating an alternate embodiment of the engagement means.

Throughout the following detailed description similar reference characters refer to similar elements in all figures of the drawings.

With reference to the Figures shown is a cassette generally indicated by reference character 10 in accordance with the present invention. The cassette 10 is adapted to receive in a light-tight manner any one of a predetermined number of standard sized rolls of a light sensitive material such as, for example, phototypesetting film. Of course, the teachings of this invention may be used in cassettes which receive other types of light sensitive product, whether or not such product is in roll, plane or other configuration.

The cassette 10 comprises a box-like receptacle member generally indicated by reference character 12. The receptacle 12 is defined by a bottom 14, an upstanding front wall 16, an upstanding rear wall 18, and a pair of upstanding end walls 20A and 20B. The receptacle 12 is preferably integrally molded or otherwise formed from suitable material such as high impact black styrene plastic, although other suitable materials may be used. The interior surfaces of the bottom 14, front wall 16, rear wall IR and end walls 20 cooperate to define a chamber 22 on the interior of the receptacle 12.

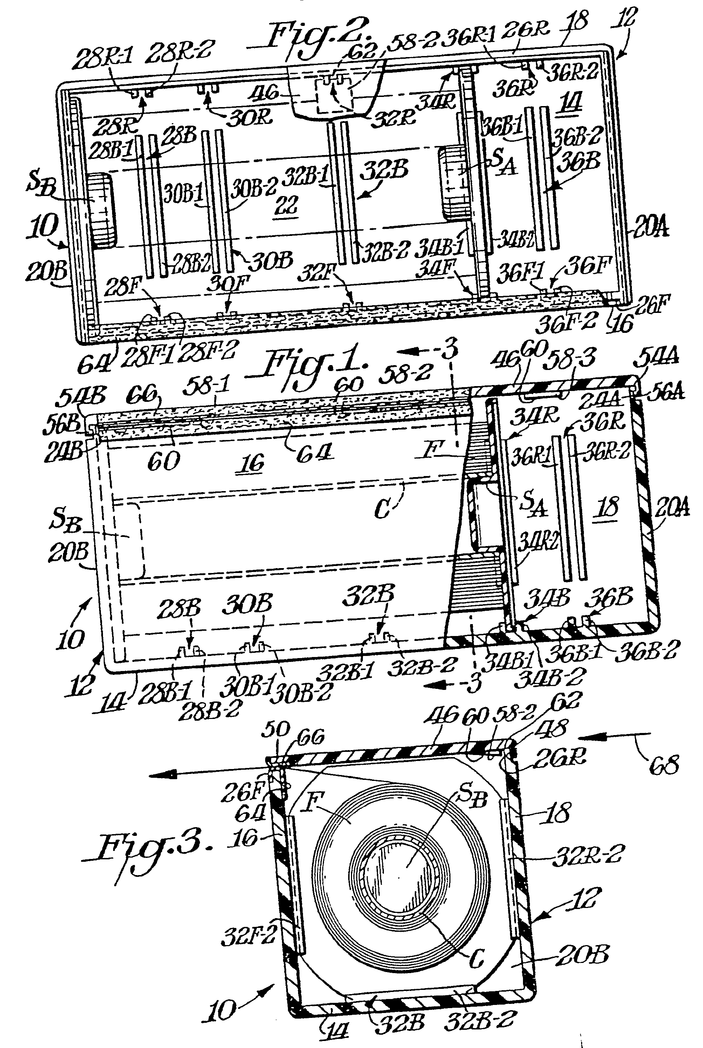

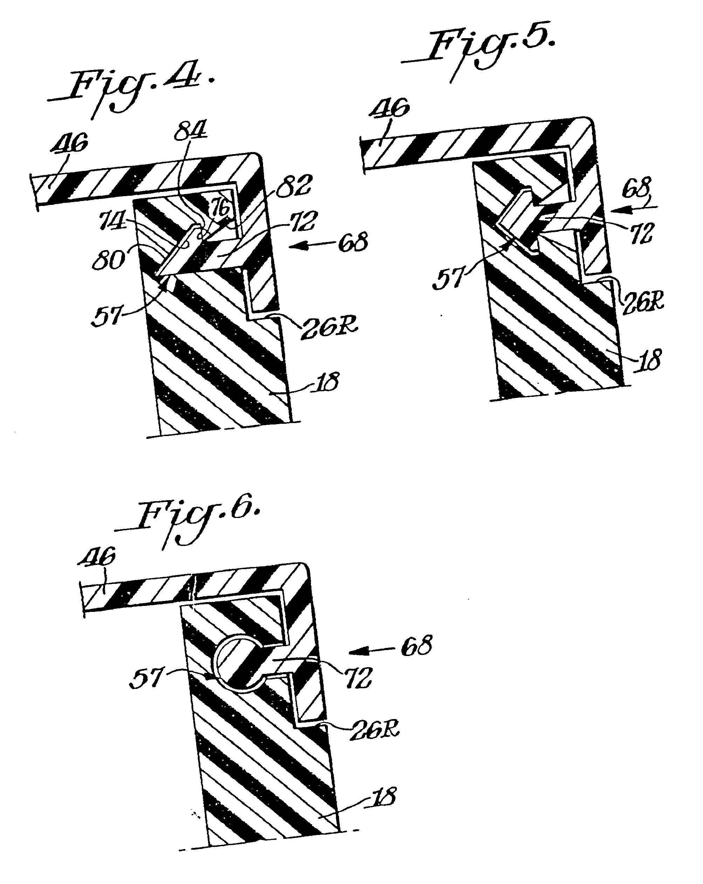

As best seen in Figure 1, each end wall 20A and 20B is provided with a guide groove 24A and 24B, respectively, which extend along the top edge of its associated end wall 20. As best seen in Figure 3, the front wall 16 is provided with a notch 26F along its top edge. Similarly, the rear wall 18 is provided with a notch 26R adjacent its top edge, both for a purpose discussed hereafter.

The interior surface of the bottom 14 of the receptacle 12 is provided with a predetermined number of channels. As seen from Figures 1 and 2 five channels indicated by reference characters 28B, 30B, 32B, 34B, and 36B are arranged in parallel relationship across the interior surface of the bottom 14. Each channel, as for example, the channel 32B, is formed and defined by guide members 32B-1 and 32B-2 which are integrally formed with the bottom 14. The guide members defining each channel are spaced a predetermined distance apart sufficient to receive in edgewise relation a film end support nember, as discussed herein.

The interior surfaces of the front wall 16 and the rear wall 18 are similarly provided with a plurality of channels 28 through 36 which correspond in position within the receptacle 12 to the position occupied by the channels disposed on the bottom 19. In the Figures, the channels disposed on the front wall are indicated by reference characters 28F, 30F, 32F, 34F, and 36F. Correspondingly, the channel; provided on the rear wall 18 are indicated by reference characters 28R, 30R, 32R, 34R and 36R. Each of the channels 28 through 36 formed on the front wall 16 and the back wall 18 is defined by a confronting pairs of guide members in a manner similar to that discussed above in detail in connection with the channel 32B. The axis of corresponding channels on the bottom, front and rear walls are aligned and coplanar.

The chamber 22 defined on the interior of the receptacle 12 is adapted to receive any one of a predetermined number of standard sized rolls of light sensitive material, such as phototypesetting film. It is recalled that during the manufacture a predetermined length of film F having a predetermined width is rolled onto a hollow tubular core C. The core C received opposed end support members which are indicated in the drawings by reference characters $S_A$ and $S_B$. The film end roll support members, which do not in themselves form a part of this invention, are generally octagonal members with cylindrical subs which are sized for receipt within opposite ends of the hollow tubular core C. The stubs loosely receive the core C and allow it to rotate thereo as film is unwound.

The position of the channels 28 through 36 with respect to the receptacle 12 permit the cassette 10 to receive any one of a predetermined number of standard sized rolls of light sensitive material. As noted earlier, film such as rolls of phototypesetting film are available in eight-inch, six-inch and four-inch roll sizes.

For example, an eight-inch wide film roll may be accommodated within the cassette 12 by the operator simply inserting the assembly of film F and end supports S into the cassette such that the end supports S are next adjacent to the interior Surface of each of the end walls 20A and 20B.

A six-inch wide film roll may be accommodated within the cassette 10 in either of three ways. For example, as shown in the Figures, the operator may choose to insert a six-inch wide film roll such that the film end roll support $S_B$ is next adjacent to the interior surface of the end wall 20B and the film end roll support $S_A$ is received and edgewise supported within the aligned channels 30B, 30F and 30R. Alternatively, the end roll support $S_A$ of the six-inch wide film roll may be inserted so as to be next adjacent to the interior surface of the end walls 20B with the end support $S_B$ then edgewise supported in the aligned channels 30B, 30F and 30R. As a third alternative, the operator may insert a six-inch wide film roll such that one end support $S_A$ is edgewise supported within the aligned channels 36B, 36F and 36R while the opposed end support $S_B$ is received within the aligned channels 28B, 28F and 28R.

As a further example, a four-inch wide film roll may be supported in any of three ways. The operator may insert the four-inch wide roll such that one of the end supports $S_A$ or $S_B$ is adjacent the interior surface of the corresponding end wall 20A and 20B, respectively, while the other end support is received in the aligned channels 32B, 32F and 32R. Alternatively, a four-inch wide film roll may be supported within the cassette 10 with the end support $S_A$ received in the aligned channels 34E, 34F and 34R while the opposed end support $S_B$ is received in the aligned channels 30B, 30F and 30R.

It should be understood that aligned channels may be disposed within the receptacle in such suitable other locations as to accommodate other predetermined sized film rolls and remain within the contemplation of the present invention. It is also to be noted that suitable and sufficient edgewise support for each of the film end roll support members may be effectively provided if channels are disposed in aligned coplanar orientation on the interior surfaces of any two of the bottom 14, front wall 16 or rear wall 18. However, in the preferred embodiment of the invention, the aligned channels are defined on the interior surfaces of each of these three members.

The cassette 10 further comprises a cover 46. The cover is provided with a downturned rear flange 48. A notch 50 is disposed on the cover 46 adjacent the front edge thereof. The cover 46 is further provided with two opposed downturned end flanges 54A and 54E. As best seen in Figure 1, tracks 56A and 56B are respectively provided on each of the end flanges 59. Each of the tracks 56 is sized for slidable engagement with the corresponding one of the guide grooves 29 provided in the end walls 20.

The cover 46 also includes engagement means generally indicated by reference character 57 cooperable with the rear wall 18 to thereby snappingly engage the cover 48 therewith. Thus, the use of glue, staples and other fasteners may be avoided.

In Figure 3, the engagement means 57 takes the form of at least one, but preferably a plurality, of tab members 50 which extend downwardly from the planar interior surface of the base portion of the cover 46. In the Figures 1 through 3 three such tabs, indicated by reference numerals 58-1, 58-2 and 58-3, extend downwardly from the base portion of the cover 46. The tabs 58 are disposed on the cover 46 in adjacency to the rear flange 48. Each of the tabs 58 is provided with a cam surface 60 for a purpose discussed herein. The tabs 58 and the rear flange 90 cooperate to define an interrupted recess 62 (Figure 3) which is sized to receive the thickness dimension of the top edge of the rear wall 18.

Alternative embodiments of the engagement means are shown in Figures 4 through 6. In Figure 4 the engagement means 57 may take the form of an inwardly directed prong 72 terminating in a cam surface 74. The prong 72 is provided with a shoulder 76. A recess 80 is formed on the exterior of the rear wall 18 in confronting relationship to the prong 64. The recess 80 has a shape complementary to that of the prong 72. The rear wall may be provided with an inclined cam surface 52 leading to the recess 80. The back 84 of the cam surface 82 defines an abutment which abuts against the shoulder 76 to prevent removal of the prong 72 from the recess 80 once it has been fully inserted. If desired, the prong 72 and recess 80 may extend along the full width dimension of the rear wall 10 or may be correspondingly interrupted.

As seen from Figure 5, the prong 72 may take a configuration in which the prong is symmetric with respect to the longitudinal axis thereof. The recess 80 is of a complementary shape. In Figure 6, the prong is provided with a rounded head and the recess is again complementary. Of course, the engagement means may take other forms. For example, wedge-shaped or circular detent-like elements may extend from the undersurface of the cover. These elements may be received within correspondingly shaped recesses provided along the top edge of the rear wall 18.

The notch 26F along the top edge of the front wall 18 receives a layer 64 of felt material. The felt layer 64 extends over the top edge of the wall 16 and is secured along the upper edge of the interior surface thereof of the front wall. Similarly, the front notch 50 provided along the front edge of the cover 46 is provided with a corresponding layer 66 of felt material for purposes to be discussed. Both layers 64 and 88 are preferably adhesively backed so that they may be expeditiously adhered to the receptacle 12 or the cover 46. Any suitable material which does not injure the surface of the film may be used for the layers 64 and 66.

In operation, one of a predetermined sized roll of phototypesetting film F with film end roll support members 8 inserted into the core C is inserted into the chamber 22 on the interior of the receptacle 12 so that opposed film end roll support members S are appropriately received and edgewise supported by any combination of one end wall 20 and/or an interior channel 28 through 36.

Thereafter, a flap of film is unrolled from the film roll and extended over the layer 64 of felt material. The cover 46 is applied to the receptacle 12 by the engagement of the tracks 56 on the opposed end flanges 54 into corresponding guide grooves provided on the upper ends of the end walls 20. The tracks 56 are introduced into the guide grooves at points adjacent to the rear wall 18 and the cover is advanced forwardly (from rear wall 18 towards front wall 16) as indicated by the reference arrow 68 (Figure 3).

When the engagement means shown in Figure 3 is used, as the tabs 58 approach the exterior surface of the rear wall 18 the action of the inclined cam surface 62 against the upper surface of the rear wall 18 causes the cover 46 to be raised in the vicinity of the rear flange 48. Continued advancement of the cover in the direction of the arrow 68, however, moves the tabs 58 inwardly of the rear wall 18 thus permitting the top of the rear wall 18 to snappingly engage itself into the interrupted recess 62 defined by the tabs 58 and the rear flange 48. Engagement of the rear flange 48 into the notch 26R disposed on the rear wall 18 prohibits further displacement of the cover 46 onto the receptacle 12. The downturned end of the rear flange 48 of the cover 46 is recieved in the notch 26R. With the cover so engaged, the layer 66 adjacent the front edge of the cover 46 is disposed in opposed relationship with the layer 64 thus providing a light-tight seal along the interface between the top of the front wall 16 and the underside of the cover 46 adjacent the front edge thereof. The film F may be unrolled through the slot defined between the layers 64 and 66.

If any of the alternative embodiments of the engagement means 57 are utilized the cassette is closed and fastened in a generally analogous manner. For example, if the engagement means shown in Figure 4 is used, advancement of the cover 46 in the direction of the arrow 68 will bring the cam surface 74 on the prong 72 into contact with the cam surface 82. Continued advancement of the cover 46 with respect to the cassette will lift the portion of the rear wall 18 above the recess 80 to permit the head of the prong 72 to fully enter the recess 80. With the prong 72 fully inserted, the portion of the rear wall above the recess snaps back to its original position, thereby snappingly engaging the cover to the cassette.

From the foregoing it may be readily appreciated that there has been provided a cassette member adapted to receive and support any one of a predetermined number of standard sized rolls of light sensitive material. Moreover, the structure of the cassette herein described permits rapid insertion of film rolls thereinto and expeditiuous closure of the cassette by an operator even in a dark room environment. The snapping engagement of the cover with the rear wall locks the cover to the receptacle without the use of staples, glue or other fasteners. As a consequence the cover may not be removed without destruction of the cassette.

Those skilled in the art having benefit of the teachings hereinabove set forth may effect numerous modifications hereto. It is to be understood, however, that such modifications lie within the contemplation of the present invention as defined in the following claims.

## Claims

1. A cassette for a light-sensitive material comprising:

an open box-like receptacle (12) having a bottom (14), upstanding front (16) and rear (18) walls and a pair of upstanding end walls (20A, 20B), a guide groove (24A, 24B) extending adjacent the top edge of each of the end walls, a cover (46) having a planar base, a downturned rear flange (48) and two opposed downturned end flanges (54A, 54B), a track (56A, 56B) disposed on each of the opposed end flanges, each track being sized for slidable engagement with a corresponding one of the guide grooves; and

engagement means (57) on the cover cooperable with the rear wall (18) for snappingly engaging the cover thereto.

2. The cassette of claim 1 wherein a channel (28; 30; 32; 34; 36) is defined on the interior surfaces of any two of the front wall, bottom or rear wall, the axes of the channels being coplanar, the channels being spaced a predetermined distance from the interior surface of each end wall, the channels being sized to receive in edgewise engagement an end support whereby a roll of light sensitive material of a predetermined width dimension is supportable within the receptacle between the channels and an end wall.

3. The cassette of claim 1 wherein a first and a second set of channels (28; 30; 32; 34; 36) are defined on the interior surfaces of any two of the front wall, bottom or rear wall, the axes of the channels in each set being coplanar, each set of channels being spaced a predetermined distance from each other and from each end wall, the channels being sized to receive in edgewise engagement an end support whereby a roll of light sensitive material of a predetermined width dimension is supportable within the receptacle between the sets of channels or between one set of channels and an end wall.

## Patentansprüche

1. Kassette für ein lichtempfindliches Material, umfassend einen einem offenen Kasten gleichenden Behälter (12), mit einem Boden (14), einer aufrecht stehenden Vorderwand (16) und einer aufrecht stehenden Rückwand (18) und einem Paar aufrecht stehender Endwände (20A, 20B), Führungsrillen (24A, 24B), die in der Nachbarschaft der Oberkante jeder der Endwände verlaufen, einen Deckel (46) mit ebener Basis, einem nach unten gezogenen rückwärtigen Flansch (48) und zwei gegenüber liegenden, nach unten gezogenen Endflanschen (54A, 54B), Schienen (56A, 56B), die an jedem der gegenüber liegenden Endflansche angeordnet sind und deren Größe so bemessen ist, daß sie in jeweils eine der Führungsrillen gleitfähig eingreifen, und Eingriffsmittel (57) am Deckel, die so zu der Rückwand (18) passend ausgeführt sind, daß der Deckel unter Einrasten daran anliegt.

2. Kassette nach Anspruch 1, dadurch gekennzeichnet, daß Kanäle (28, 30, 32, 34, 36) auf den inneren Oberflächen von jeweils zwei der Bauteile Vorderwand, Boden oder Rückwand definiert sind, wobei die Achsen der Kanäle coplanar sind, die Kanäle in vorher festgelegtem Abstand von der inneren Oberfläche jeder Endwand angeordnet sind und die Kanäle so dimensioniert sind, daß sie in kantenweisem Eingriff einen Endträger aufnehmen, wodurch eine Rolle eines lichtempfindlichen Materials einer vorher festgelegten Breitenabmessung innerhalb des Behälters zwischen den Kanälen und einer Endwand gestützt werden kann.

3. Kassette nach Anspruch 1, dadurch gekennzeichnet, daß ein erster Satz und ein zweiter Satz Kanäle (28, 30, 32, 34, 36) auf den inneren Oberflächen von jeweils zwei der Bauteile Vorderwand, Boden oder Rückwand definiert sind, wobei die Achsen der Kanäle in jedem Satz coplanar sind, jeder Satz Kanäle in einem vorher festgelegten Abstand von der inneren Oberfläche jeder Endwand angeordnet sind und die Kanäle so dimensioniert sind, daß sie in kantenweisem Eingriff einen Endträger aufnehmen, wodurch eine Rolle eines lichtempfindlichen Naterials einer vorher festgelegten Breitenabmessung innerhalb des Behälters zwischen den Sätzen der Kanäle oder zwischen einem Satz Kanäle und einer Endwand gestützt werden kann.

## Revendications

1. Une cassette pour un matériel photosensitif comprenant un réservoir (12) semblable à une boîte ouverte, ayant un fond (14), un panneau avant droit (16), et un panneau arrière droit (18) une paire de panneaux de fin (28A, 28B), gorge: de guidage (24A, 24B) s'étendant dans le voisinage du bord supérieur de chacun des panneaux de fin,

un couvercle (46) d'une base plane, une brid arrière (48) formée vers le bas et deux brides finales (54A, 54B) situées vis-à-vis et dirigées ' le bas, rails (56A, 56B), disposés à chacune de brides finales opposées et dimensionnés à engager d'une manière glissante une des gor de guidage, et

moyens d'engagement (57) au couvercle coopérant avec le panneau arrière (18) en assurant que le couvercle s'y engage en prenant l'encoche.

2. Cassette selon la revendication 1, caractérisée par le fait que des canaux (28, 38, 32, 34, 36) sont définis sur les surfaces intérieures de deux éléments chaque fois parmi le panneau avant, le fond ou le panneau arrière, les axes des canaux étant coplanaires et les canaux étant disposés à une distance prédéterminée de la surface intérieure à chaque panneau final et étant dimensionnés pour recevoir en engagement sur chant un support final, de manière qu'un rouleau d'un matériel photosensitif dimensionné d'une largeur préeéterminée peut être supporté dans le réservoir entre les canaux et un panneau final.

3. Cassette selon la revendication 1, caractérisée par le fait qu'un premier jeu et un deuxième jeu de canaux (29, 38, 32, 34, 36) est défini sur les surfaces intérieures de deux éléments chaque fois parmi le panneau avant, le fond ou le panneau arrière, les axes de canaux de chaque jeu étant coplanaires, chaque jeu de canaux étant disposé à une distance prédéterminée de l'un de l'autre et de chaque panneau final, les canaux étant dimensionnés pour recevoir en engagement sur chant un support final de manière qu'un rouleau de matériel photosensitive dimensionné d'une largeur prédéterminé peut être supporté dans le réservoir entre les jeux de canaux ou entre un jeu de caunaux et un panneau final.

0 125 674

Fig.2.

Fig.1.

Fig.3.

*Fig.4.*

46 84 82 74 76 72 80 68 57 26R 18

*Fig.5.*

46 68 72 57 26R 18

*Fig.6.*

46 68 57 72 26R 18